(19) Europäisches Patentamt

European Patent Office

Office européen des brevets

(11) **EP 1 256 092 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(21) Anmeldenummer: **01902377.9**

(22) Anmeldetag: **01.02.2001**

(51) Int Cl.:
***G06K 19/07*** *(2006.01)*

(86) Internationale Anmeldenummer:
**PCT/EP2001/001058**

(87) Internationale Veröffentlichungsnummer:
**WO 2001/057790 (09.08.2001 Gazette 2001/32)**

(54) **TRANSPONDER MIT TAKTFREQUENZREGELUNG, INSBESONDERE FÜR EINE KONTAKTLOSE CHIPKARTE**

TRANSPONDER WITH CLOCK FREQUENCY CONTROL, ESPECIALLY FOR A CONTACTLESS CHIP CARD

TRANSPONDEUR AVEC REGLAGE DE LA FREQUENCE D'HORLOGE, EN PARTICULIER POUR CARTE A PUCE SANS CONTACT

(84) Benannte Vertragsstaaten:
**AT BE CH CY DE DK ES FI FR GB GR IE IT LI LU MC NL PT SE TR**

(30) Priorität: **04.02.2000 DE 10004922**

(43) Veröffentlichungstag der Anmeldung:
**13.11.2002 Patentblatt 2002/46**

(73) Patentinhaber: **Giesecke & Devrient GmbH 81677 München (DE)**

(72) Erfinder:
• **BALDISCHWEILER, Michael 81825 München (DE)**
• **FINKENZELLER, Klaus 80939 München (DE)**

(74) Vertreter: **Höhfeld, Jochen et al Klunker Schmitt-Nilson Hirsch Patentanwälte Winzererstrasse 106 80797 München (DE)**

(56) Entgegenhaltungen:
**EP-A- 0 568 237          EP-A- 0 977 144**
**US-A- 5 418 358          US-A- 5 914 980**
**US-A- 5 963 132**

• **LEONARD M: "RF TRANSPONDER EMBEDDED IN AUTO IGNITION KEYS STYMIES CAR THIEVES" ELECTRONIC DESIGN,US,PENTON PUBLISHING, CLEVELAND, OH, Bd. 41, Nr. 25, 2. Dezember 1993 (1993-12-02), Seiten 35-36, XP000423195 ISSN: 0013-4872**
• **SEIFART MANFRED: 'Digitale Schaltungen', 1998, VERLAG TECHNIK, BERLIN * Seite 180 - Seite 223 ***

EP 1 256 092 B1

## Beschreibung

Die Erfindung betrifft einen Transponder, insbesondere einen Transponder für eine kontaktlose Chipkarte. Der Begriff Transponder bezeichnet hier eine Anordnung aus einer Antenne und einer elektronischen Schaltung, insbesondere in Form eines Chips, wobei die für den Betrieb des Chips erforderliche Energie ebenso wie Daten über die als Spule ausgebildete Antenne empfangen wird. Derartige Transponder werden in kontaktlosen Chipkarten, in auf Waren angebrachten Etiketten, in Schlüsseln, insbesondere Autoschlüsseln als Wegfahrsperre, aber auch - üblicherweise in eine Glas- oder Porzellankapsel eingebaut - in Tierkörpern zur Identifikation verwendet.

Diese Transponder sind ausgelegt für den unidirektionalen oder bidirektionalen Datenaustausch mit einem externen Gerät, welches hier als Lesegerät bezeichnet werden soll. Das Lesegerät strahlt über eine Antenne ein hochfrequentes Magnetfeld ab, wobei der Transponder in mehr oder weniger großer Nähe des Lesegeräts dem Magnetfeld Energie über eine großflächige Spule entnimmt. Gleichzeitig mit der Energieaufnahme leitet der Transponder ein Taktsignal ab. Aufbau und Arbeitsweise derartiger Transponder gemäß dem Oberbegriff des Anspruchs 1 sind im Stand der Technik ausführlich beschrieben, beispielsweise wird verwiesen auf die US-PS 5 841 123, den Artikel "Kontaktlose Chipkarten" von Klaus Finkenzeller, Funkschau 19/98, Seiten 40-43 und Klaus Finkenzeller, RFID-Handbuch, Carl Hanser Verlag, München/Wien, 1999. Aus EP-A- 0 977 144 ist ein kontaktloser Datenträger bekannt, bei dem einzelne Flanken des internen Taktsignals blockiert werden, wenn die interne Versorgungsspannung zum entsprechenden Zeitpunkt unterhalb eines vorgegebenen Grenzwertes liegt. Hierdurch wird zur Vermeidung von Fehlfunktionen verhindert, dass durch eine Taktflanke Schaltvorgänge bei ungenügender Versorgungsspannung ausgelöst werden.

Um das Verständnis der Erfindung zu erleichtern, sollen nachfolgend grundlegende Merkmale eines Transponders erläutert werden, die später anhand der Figurenbeschreibung näher dargestellt werden.

Ein Lesegerät strahlt über eine Antenne ein hochfrequentes Magnetfeld von zum Beispiel 13,56 MHz ab. Befindet sich die Antenne eines Transponders in diesem Magnetfeld, so wird aufgrund der Gegenkopplung zwischen den beiden Antennen in den Transponder Energie eingekoppelt. Die für den Transponder verfügbare elektrische Leistung ist proportional zu der magnetischen Feldstärke an der Antenne. Die Feldstärke am Transponder ist umgekehrt proportional zur Entfernung ($1/x^3$) vom Lesegerät und ändert sich somit im Betriebszustand sehr stark.

Der Mikrochip benötigt eine konstante Versorgungsspannung, der Betrieb erfolgt bei konstanter Taktfrequenz. Bei sehr kurzen Abständen zwischen Lesegerät und Transponder würde ohne Gegenmaßnahmen die in dem Transponder induzierte Spannung die benötigte Versorgungsspannung übersteigen. Es wird daher parallel zu der Last ein Shuntregler geschaltet, der im Fall einer erhöhten induzierten Spannung im Transponder zur Konstanthaltung der Versorgungsspannung überschüssige Leistung in Wärme umwandelt.

Der Erfindung liegt die Aufgabe zugrunde, einen Transponder anzugeben, bei dem die in dem Transponder verfügbare elektrische Leistung besser ausgenutzt wird als bei bekannten Transpondern.

Zu diesem Zweck schafft die Erfindung einen Transponder mit einer internen digitalen Schaltung, die von einem Taktgeber mit einem eine Taktfrequenz aufweisenden Taktsignal betrieben wird, und mit einer internen Energieversorgung, die kontaktlos durch ein äußeres Wechsel-Magnetfeld gespeist wird. Erfindungsgemäß ist bei diesem Transponder vorgesehen, daß der Taktgeber eine Taktfrequenz-Einstelleinrichtung gemäß dem kennzeichnenden Teil des Anspruchs 1 aufweist.

Der Begriff "abhängig von der Feldstärke" bedeutet, daß die Einstellung der Taktfrequenz des Taktsignals entweder direkt abhängig von der Feldstärke, oder indirekt abhängig von der Feldstärke eingestellt wird. Man kann die Feldstärke messen und abhängig von dem Meßergebnis die Taktfrequenz einstellen, man kann aber auch die Taktfrequenz abhängig von der induzierten Spannung verändern, da die induzierte Spannung von der Feldstärke an der Antenne abhängt. Bei dem erfindungsgemäßen Transponder wird die Taktfrequenz, mit dem die digitale Schaltung (Mikrochip) arbeitet, abhängig von der Feldstärke, das heißt abhängig von dem Abstand zwischen Lesegerät und Transponder, nachgeführt. Bei geringen Abständen zwischen Lesegerät und Transponder steht relativ viel Energie im Transponder zur Verfügung. Dementsprechend kann die Taktfrequenz erhöht werden. Anstatt die überschüssige Energie mit Hilfe des Shuntreglers zu vernichten, wird die Taktfrequenz des Taktsignals erhöht.

Betrachtet man einen typischen Mikrochip, der in CMOS-Technologie ausgeführt ist, so entspricht der Energieverbrauch P in einer solchen Schaltung

$$P = C_L \times U_{dd}^2 \times f_d$$

wobei

P = in einem Gatter verbrauchte Leistung

$C_L$ = Schaltungskapazität des Gatters

$U_{dd}$ = Betriebsspannung

$f_d$ = mittlere Arbeitsfrequenz (Taktfrequenz).

Bei konstanten oder nahezu konstanten Werten von $C_L$ und $U_{dd}$ ergibt sich also eine lineare Abhängigkeit zwischen dem Energieverbrauch der CMOS-Schaltung einerseits und der Taktfrequenz des Arbeitstaktes andererseits.

Durch die erfindungsgemäße Maßnahme wird also bei Abständen zwischen Transponder und Lesegerät, die unter der maximal möglichen Entfernung liegen, die Taktfrequenz stufenlos oder in Stufen erhöht, so daß die Arbeitsvorgänge in dem Mikrochip schneller ablaufen. Die früher ausschließlich durch den Shuntregler vernichtete überschüssige Energie wird erfindungsgemäß also zur Erhöhung der Arbeitsgeschwindigkeit, das heißt zur Verkürzung der Gesamtarbeitszeit genutzt.

Andererseits kann aber auch die erfindungsgemäße Maßnahme dazu genutzt werden, die Entfernung herabzusetzen, bis zu der noch Energie von dem Lesegerät in den Transponder eingespeist werden kann. Bei relativ großen Entfernungen kann die Taktfrequenz bis an eine noch zulässige Grenze verringert werden, so daß die Komponenten des Mikrochips gerade noch funktionstüchtig sind. Es hat sich gezeigt, daß durch die erfindungsgemäße Maßnahme die Reichweite des Transponders, das heißt der für den Betrieb mindestens einzuhaltende Maximalabstand zwischen Lesegerät und Transponder um circa 30 bis 50% vergrößert werden kann.

Üblicherweise besitzen Transponder einen Gleichrichter am Ausgang der Empfangsantenne. Die von dem Gleichrichter gelieferte ungeregelte Spannung wird in einer bevorzugten Ausgestaltung der Erfindung als Istwert und Regelgröße verwendet, sie wird mit einer intern erzeugten Referenzspannung verglichen, und aus dem Differenzsignal - welches repräsentativ für die Feldstärke und den Abstand zwischen Lesegerät und Transponder ist - wird die Taktfrequenz des Arbeitstakts für den Mikrochip eingestellt.

Zur Realisierung der Takteinstellung gibt es mehrere Möglichkeiten. Bevorzugt wird erfindungsgemäß der Einsatz eines spannungsgesteuerten Oszillators (VCO), dessen Eingang die ungeregelte Spannung aus dem Gleichrichter zugeführt wird, und dessen Ausgang das Taktsignal liefert, wobei dieses Taktsignal gegebenenfalls noch weiter verarbeitet wird, beispielsweise auf einen Signalformer und/oder einen Frequenzteiler gegeben wird.

In einer weiteren bevorzugten Ausgestaltung der Erfindung wird die Taktfrequenzeinstellung mit Hilfe eines einstellbaren Frequenzteilers realisiert. Zu diesem Zweck wird das aus einem Referenzsignal und der ungeregelten Spannung des Gleichrichters gewonnene Differenzsignal von einem Analog-Digital-Umsetzer in einen Digitalwert umgesetzt, gegebenenfalls noch zusätzlich bearbeitet, und dann dem Einstelleingang eines einstellbaren Frequenzteilers zugeführt, dessen Signaleingang das vom Transponder empfangene Taktsignal fester Frequenz (z.B.13,56 MHz) zugeleitet wird. Am Ausgang des einstellbaren Frequenzteilers wird dann das Taktsignal gebildet. Je geringer der Abstand zwischen Lesegerät und Transponder, desto höher ist die ungeregelte Spannung am Ausgang des Gleichrichters, desto höher ist die Differenz bezüglich der Referenzspannung, desto größer ist der durch den A/D-Wandler gewonnene Digitalwert, und desto kleiner ist der Divisor des Frequenzteilers, und dementsprechend hoch ist das Ausgangssignal des Frequenzteilers als Taktsignal.

Es sei darauf hingewiesen, daß die Einstellung des Taktsignals ausschließlich die rein internen Betriebsabläufe des Transponders betrifft. Für die Kommunikation mit dem Lesegerät ist eine feste, genormte Taktfrequenz erforderlich. Diese Taktfrequenz wird von dem Lesegerät über das hochfrequente Magnetfeld auf den Transponder übertragen und wird in dem Transponder für den Betrieb einer Schnittstellenschaltung aufbereitet.

Komponenten in der digitalen Schaltung des Transponders, die von einem in der Frequenz einstellbaren Taktsignal betrieben werden, sind beispielsweise ein RAM, ein Microcontroller, ein EEPROM, etc. Die erfindungsgemäße Maßnahme, die Taktfrequenz abhängig vom Abstand zwischen Transponder und Lesegerät zu verändern, führt bei sehr geringen Abständen zu entsprechend hohen Taktfrequenzen. Es gibt natürlich eine Obergrenze für die Taktfrequenz. In einer bevorzugten Ausgestaltung der Erfindung ist vorgesehen, daß bei Erreichen einer definierten Maximal-Taktfrequenz

-   eine Ladungspumpe zugeschaltet wird, um die Schreibgeschwindigkeit eines zu der digitalen Schaltung gehörigen EEPROMs zu steigern und/oder

-   ein Shuntregler in Betrieb gesetzt wird, um überschüssige Energie mit Hilfe eines ohmschen Widerstandselements in Wärme umzusetzen.

Der optimale Betrieb bei sehr kleinen Abständen zwischen Transponder und Lesegerät läuft also in der Weise ab, daß überschüssige Energie zunächst zur Erhöhung der Taktfrequenz des Arbeitstakts genutzt wird. Ist die Maximal-Taktfrequenz erreicht, so wird die Ladungspumpe für den Betrieb des EEPROMs des Mikrochips zugeschaltet, und wenn die Ladungspumpe bei größtmöglicher Leistung arbeitet, wird letztlich noch der an sich bekannte Shuntregler aktiviert.

Die Erfindung eignet sich insbesondere für die Verwendung in einer Chipkarte, jedoch sind auch andere Verwendungsmöglichkeiten gegeben, so zum Beispiel kann der erfindungsgemäße Transponder ganz allgemein in einem Identifizierungselement eingesetzt werden, beispielsweise einem Etikett, welches an Waren, an Regalen und dergleichen angebracht wird. Möglich ist auch die Verwendung in einem Schlüssel zum Öffnen von Türen oder in einem Zündschlüssel zum Lösen einer Wegfahrsperre. Eine weitere Einsatzmöglichkeit ist der Einsatz bei Zuchttieren in landwirtschaftlichen Betrieben zur Erleichterung der Verwaltung und der Fütterung.

Im folgenden werden Ausführungsbeispiele der Erfindung anhand der Zeichnung näher erläutert. Es zeigen:

Fig. 1    ein Ersatzschaltbild eines bekannten Transponders in Verbindung mit einem schematisch dargestellten Lesegerät;

Fig. 2    ein Ersatzschaltbild eines Transponders mit einem Shuntregler zur Spannungsregelung;

Fig. 3    ein Blockschaltbild einer Ausführungsform eines erfindungsgemäßen Transponders;

Fig. 4    eine graphische Darstellung des Widerstands eines Shuntreglers in Abhängigkeit des Kopplungsfaktors zwischen einer Empfangsantenne eines Transponders und einem äußeren Magnetfeld;

Fig. 5    ein vereinfachtes Blockschaltbild einer speziellen Ausführungsform einer Taktfrequenz-Einstelleinrichtung; und

Fig. 6    ein Blockschaltbild einer weiteren speziellen Ausführungsform einer Taktfrequenz-Einstelleinrichtung des erfindungsgemäßen Transponders.

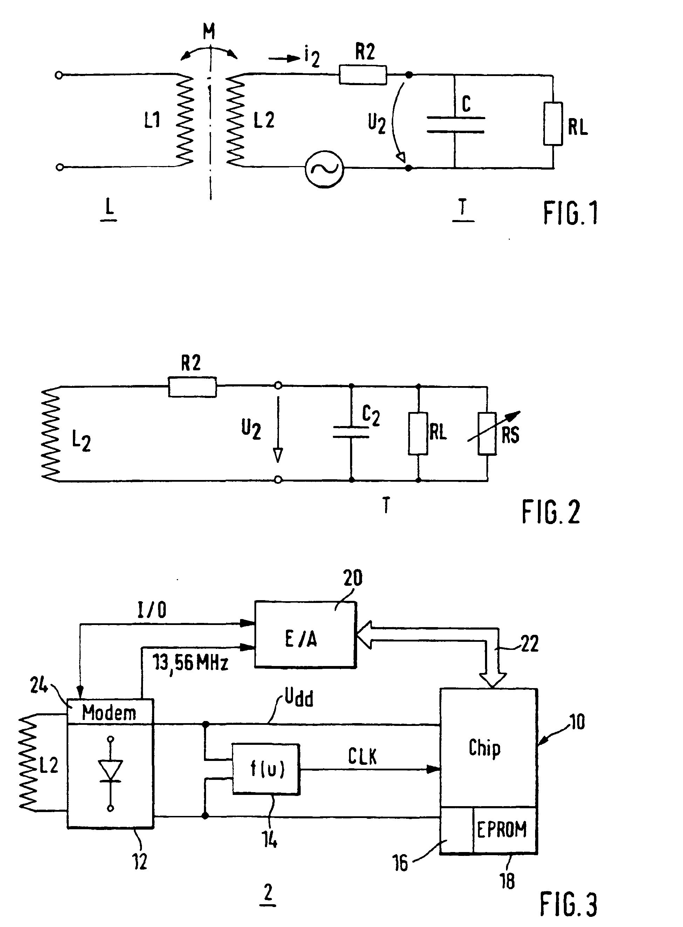

Gemäß Figur 1 strahlt ein Lesegerät L über eine Antenne L1 ein hochfrequentes Magnetfeld von zum Beispiel 13,56 MHz ab. Befindet sich die Antenne L2 eines Transponders T in diesem Magnetfeld, so wird aufgrund der Gegenkopplung M zwischen den beiden Antennen L1 und L2 in den Transponder T Energie eingekoppelt, durch den Widerstand R2 des Eingangskreises fließt ein Strom i2. Mit RL ist die Last bezeichnet, die durch einen Mikrochip gebildet wird. Parallel zu der Last RL liegt ein Kondensator C, der zusammen mit der Antenne L2 einen Schwingkreis bildet, welcher auf die Sendefrequenz des Lesegeräts L abgestimmt ist.

Die für den Transponder verfügbare elektrische Leistung ist proportional zu der magnetischen Feldstärke an der Antenne L2. Damit die für den Betrieb des Mikrochips benötigte Energie empfangen wird, muß die Antenne L2 einen Mindestabstand von dem Lesegerät L haben. Aus dem Verlauf der Feldstärke in Abhängigkeit des Abstands von der Antenne L1 des Lesegeräts L ist ersichtlich, daß sich die Feldstärke in den derzeit üblichen Arbeitsbereichen bekannter Chipkarten um mehr als den Faktor 30 ändern kann (Feldstärke H = 0,15 ... 5 [A/m]).

Der Mikrochip benötigt eine konstante Versorgungsspannung, der Betrieb erfolgt bei konstanter Taktfrequenz. Die in Figur 1 dargestellte Schaltung ist so ausgelegt, daß dann, wenn die Antenne L2 einen definierten Mindestabstand von der Antenne L1 hat, die benötigte Versorgungsspannung für den Betrieb der Komponenten des Mikrochips (RAM, EEPROM, Microcontroller, etc.) gerade erreicht wird. Bei kürzeren Abständen zwischen Lesegerät L und Transponder T würde ohne Gegenmaßnahmen die in dem Transponder induzierte Spannung die benötigte Versorgungsspannung übersteigen.

Gemäß Figur 2 wird daher parallel zu der Last RL ein Shuntregler RS geschaltet, also ein Nebenschluß-Widerstand, der im Fall einer erhöhten induzierten Spannung im Transponder zur Konstanthaltung der Versorgungsspannung U2 überschüssige Leistung in Wärme umwandelt.

Abhängig von der Entfernung zwischen Lesegerät L und Transponder T ist also der Shuntregler im Ruhezustand, d.h. hochohmig, (wenn der Transponder T die maximale, einen Betrieb des Transponders ermöglichende Entfernung überschreitet), oder der Shuntregler RS ist maximal stromleitend, nämlich dann, wenn der kleinste Abstand zwischen Lesegerät L und Transponder T vorhanden ist. Bei dem in Figur 2 gezeigten Ersatzschaltbild des Transponders T ist der Shuntregler RS als veränderbarer Widerstand dargestellt. Die konkrete Ausgestaltung von Shuntreglern in integrierten Chips ist dem Fachmann bekannt.

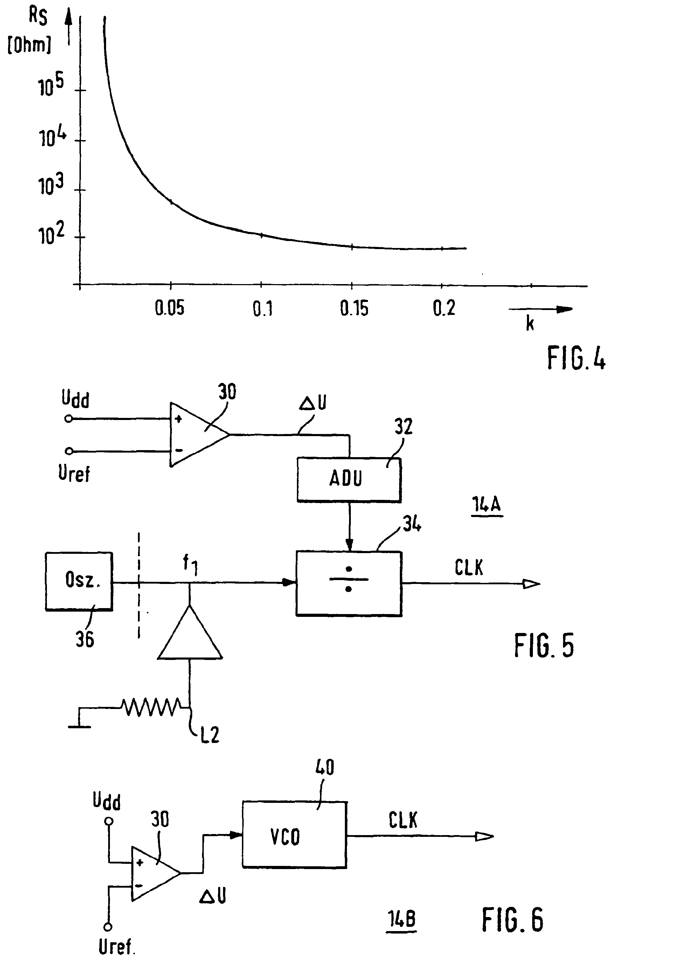

Figur 4 zeigt den Eingangswiderstand des Shuntreglers RS in Abhängigkeit des Kopplungsfaktors zwischen der Antennenspule des Transponders und der Antennenspule des Lesegeräts. Eine Vergrößerung des Kopplungsfaktors k entspricht einer Verringerung des Abstands zwischen den beiden Antennen.

Wie man in Figur 4 erkennt, ist bei einem sehr kleinen Kopplungsfaktor (großem Abstand) zwischen den Antennen der Eingangswiderstand des Shuntreglers RS unendlich hoch, um dann bei Erreichen der maximalen Betriebsentfernung rasch abzunehmen.

Bei dem Entwurf eines Transponders muß die Energieversorgung derart ausgelegt werden, daß der Mikrochip bei einer vorgegebenen maximalen Entfernung zwischen Lesegerät und Transponder betriebsfähig ist. In diesem Zustand ist der Shuntregler noch nicht aktiv.

Die oben genannte Forderung beim Entwurf eines Transponders bedeutet aber auch, daß immer dann, wenn der Transponder von dem Lesegerät eine den Maximalabstand unterschreitende Entfernung aufweist, der Shuntregler aktiv ist, um durch Umsetzen der zusätzlich aufgenommenen Leistung in Wärme die Spannung U2 konstant zu halten. Sobald sich der Transponder für den Datenaustausch mit dem Lesegerät letzterem annähert, wird also mit dem Unterschreiten der maximal möglichen Entfernung mehr Energie in den Transponder eingekoppelt, als für den Betrieb notwendig ist.

Figur 3 zeigt eine Ausführungsform eines erfindungsgemäßen Transponders 2. Der Transponder 2 enthält die oben bereits angesprochene, als Flachspule ausgebildete Empfangsantenne L2, an die ein Gleichrichter 12 angeschlossen ist. An den Ausgang des Gleichrichters 12 ist ein Mikrochip 10 angeschlossen, der von dem Gleichrichter 12 die gleichgerichtete Ausgangsspannung $U_{dd}$ empfängt. Diese Spannung $U_{dd}$ wird auch von einem eine Taktfrequenz-Einstelleinrichtung enthaltenen Taktgeber 14 empfangen, der die Taktfrequenz CLK des Mikrochips 10 abhängig von der induzierten und gleichgerichteten Spannung $U_{dd}$ regelt. Diese Abhängigkeit der Frequenz des Taktsignals CLK von der induzierten Spannung ist in dem Block des Taktgebers 14 durch die Funktion f(u) angedeutet.

Die einzelnen Komponenten des Mikrochips sind hier nicht sämtlich einzeln dargestellt. Dargestellt ist ein EPROM 18 sowie eine Ladungspumpe 16, auf die weiter unten noch eingegangen wird. Über einen Bus 22 ist der Mikrochip 10 mit einer Schnittstellenschaltung 20 verbunden. Diese Schnittstellenschaltung 20 erhält von einem Modem 24 ein von dem Lesegerät über das hochfrequente Magnetfeld geliefertes Taktsignal, hier mit einer Frequenz von 13,56 MHz. Zum Senden von Daten gibt die Schnittstellenschaltung 20 Sendedaten an das Modem 24, so daß die Daten über die Antenne L2 abgestrahlt werden.

In Figur 3 ebenfalls nicht dargestellt ist ein in dem Mikrochip 10 vorhandener Shuntregler, wie er in der Ersatzschaltung der Figur 2 rechts dargestellt ist.

Wenn die Antenne L2 des in Figur 3 dargestellten Transponders 2 in die Nähe eines hier nicht dargestellten Lesegeräts gelangt und dabei einen bestimmten Abstand zu dem Gerät unterschreitet, liefert der Gleichrichter 12 eine gleichgerichtete Spannung $U_{dd}$, die so groß ist, daß der Betrieb des Mikrochips 10, mithin des gesamten Transponders möglich ist. Wird der Abstand zu dem Lesegerät noch verringert, steigt die Spannung $U_{dd}$ etwas an, wobei allerdings der Spannungswert bis auf eine bleibende Regelabweichung mit Hilfe der erfindungsgemäßen Taktfrequenz-Einstellschaltung 14 über die frequenzabhängige Stromaufnahme des Mikrochips heruntergeregelt wird.

Während bei früheren Transpondern der Betrieb bei einer festen, durch Teilung der Sendefrequenz des Lesegerätes erzeugten Frequenz, beispielsweise 3,39 MHz (13,56MHz/4), erfolgt, wird bei dem in Figur 3 dargestellten Transponder bereits ein Betrieb bei einer viel niedrigeren Frequenz ermöglicht. Wenn allerdings die Entfernung zwischen Lesegerät und Transponder über einen gewissen Wert hinaus zunimmt, findet kein Betrieb im Transponder statt. Nach Unterschreiten der Reichweite wird in den Transponder 2 mehr Energie eingespeist, als für den Betrieb des Transponders an sich nötig wäre. Diese überschüssige Energie wird zur Erhöhung der Taktfrequenz des Arbeitstakts CLK genutzt, was die Leistungsfähigkeit des Transponders 2 steigert.

Bezugnehmend auf Figur 5 wird eine erste spezielle Ausführungsform des Taktgebers 14 gemäß Figur 3 erläutert, in Figur 5 mit dem Bezugszeichen 14A versehen.

Die von dem Gleichrichter 12 kommende Gleichspannung $U_{dd}$ wird in einem Vergleicher 30 mit einer intern in dem Transponder erzeugten Referenzspannung $u_{ref}$ verglichen. Die Spannungsdifferenz $\Delta u$ wird von einem Analog-Digital-Umsetzer (ADU) 32 in einen Digitalwert umgewandelt, der auf einen Einstelleingang eines einstellbaren Frequenzteilers 34 gegeben wird. Der Signaleingang des Frequenzteiler 34 erhält ein, aus der an der Spule L2 induzierten Spannung abgeleitetes Signal mit einer festen Frequenz f1 (z.B. 13,56 MHz). Alternativ kann das Signal mit der festen Frequenz f1 auch durch einen im Transponder angeordneten Oszillator 36 erzeugt werden.

Abhängig von dem an den Einstelleingang gegebenen Digitalwert wird die relativ hohe Frequenz f1 geteilt, so daß die Frequenz des Arbeitstakts CLK am Ausgang des Frequenzteilers 34 bei hoher Spannung $U_{dd}$, also hohem Differenzsignal $\Delta u$ entsprechend hoch ist.

Ist die Frequenz des Arbeitstakts CLK aufgrund des geringen Abstands zwischen dem Transponder 2 und dem Lesegerät so hoch, daß eine weitere Steigerung nicht möglich ist für den Betrieb des Mikrochips 10, so wird die in Figur 3 schematisch angedeutete Ladungspumpe 16 für den EPROM 18 zugeschaltet. Mit Hilfe der Ladungspumpe läßt sich die Schreibgeschwindigkeit beim Beschreiben des EPROMs steigern.

Es sind Ausführungsformen mit und ohne Shuntregler in dem Mikrochip 10 möglich. Ein solcher Shuntregler kann alternativ zu der Ladungspumpe 16 aktiviert werden, wenn die maximale Taktfrequenz erreicht wird, der Shuntregler kann aber auch als drittes Element zur Konstanthaltung der Spannung $U_{dd}$ eingesetzt werden, falls die Taktfrequenz bis an die Maximalgrenze gesteigert wurde und auch die Ladungspumpe 16 mit maximaler Leistung arbeitet.

Figur 6 zeigt eine Alternative für den Taktgeber nach Figur 5. Der in Figur 6 gezeigte Taktgeber 14B liefert das wie in Figur 5 gewonnene Differenzsignal $\Delta u$ an einen spannungsgesteuerten Oszillator (VCO) 40. Bei geringen Entfernungen zwischen Transponder und Lesegerät und entsprechend großem Differenzsignal $\Delta u$ ist die Ausgangsfrequenz des VCO 40 relativ hoch, bei kleinem Signal $\Delta u$ ist die Frequenz des Ausgangssignals des VCO 40 relativ niedrig. An den VCO können noch weitere Signalverarbeitungsschaltungen angeschlossen sein, beispielsweise Signalformerschaltungen, Frequenzteiler etc. Der Vorteil dieser Ausführungsform besteht darin, daß die maximale Ausgangsfrequenz des VCO auch größer als die an der Spule L2 eingekoppelte Taktfrequenz des Lesegerätes (13,56 MHz) sein kann (mit CMOS über 50 MHz nach aktuellem Stand).

Der erfindungsgemäße Transponder wird in eine kontaktlose Chipkarte integriert, die - weil im Prinzip bekannt - in der Zeichnung nicht dargestellt ist. Ebenso bekannt sind weitere Einsatzmöglichkeiten von Transpondern, so zum Beispiel die Einkapselung zur Verabreichung bei Tieren, der Einbau in einen Autoschlüssel für eine automatische Wegfahrsperre und dergleichen. Der erfindungsgemäße Transponder findet bei all diesen Einsatzmöglichkeiten Anwendung.

**Patentansprüche**

1. Transponder, mit einer internen digitalen Schaltung (10), die von einem Taktgeber (14) mit einem eine Taktfrequenz aufweisenden Taktsignal betrieben wird, und mit einer internen Energieversorgung (12), die kontaktlos durch ein äußeres Wechsel-Magnetfeld gespeist wird, **dadurch gekennzeichnet, daß** der Taktgeber eine Taktfrequenz-Einstelleinrichtung (30-34; 40) mit Mitteln zum Einstellen der Taktfrequenz des Taktsignals (CLK) abhängig von der Feldstärke des äußeren Magnetfelds am Transponder (2) aufweist, wobei die Taktfrequenzeinstelleinrichtung aus einem spannungsgesteuerten Oszillator oder einem Oszillator (40) besteht, dem ein Frequenzteiler (34) mit einstellbarem Teilungsverhältnis nachgeschaltet ist.

2. Transponder nach Anspruch 1, mit einer Empfangsantenne (L2) für das Magnetfeld und mit einem an die Empfangsantenne angeschlossenen Gleichrichter (12), **dadurch gekennzeichnet, daß** die am Ausgang des Gleichrichters anstehende, ungeregelte Spannung ($U_{dd}$), die repräsentativ für die Feldstärke des Magnetfelds an der Empfangsantenne ist, als Stellsignal der Taktfrequenz-Einstelleinrichtung (14) zugeführt wird.

3. Transponder nach Anspruch 1 oder 2, **dadurch gekennzeichnet, daß** dem Eingang des spannungsgesteuerten Oszillators die ungeregelte Spannung oder ein aus dieser abgeleiteter Signalwert zugeführt wird, und dessen Ausgang das Taktsignal oder ein Vorläufersignal des Taktsignals (CLK) liefert.

4. Transponder nach Anspruch 1 oder 2, **dadurch gekennzeichnet, daß** die Taktsignal-Einstelleinrichtung aufweist:

   - einen Analog-Digital-Wandler (32), der die ungeregelte Spannung in einen Digitalwert umsetzt;
   - den Frequenzteiler 34 mit verstellbarem Teilungsverhältnis,

      i) der an einem ersten Eingang mit einem Signal fester Frequenz beaufschlagt wird, welches aus einer an der Spule L2 induzierten Spannung abgeleitetet wird, und
      ii) dessen zweiter Eingang durch den Analog-Digital-Wandler (32) ein aus der ungeregelten Spannung abgeleitetes Divisor-Signal empfängt, und
      iii) dessen Ausgang das Taktsignal (CLK) abgibt.

5. Transponder nach einem der Ansprüche 1 bis 4, mit einer Schnittstellenschaltung (20), die dem Datenaustausch mit einem externen Gerät dient und die mit einem Kommunikations-Taktsignal fester Frequenz betrieben wird.

6. Transponder nach einem der Ansprüche 1 bis 5, **dadurch gekennzeichnet, daß** die Taktfrequenz des Taktsignals (CLK) innerhalb eines definierten Arbeitsbereichs der am Transponder durch das Magnetfeld verfügbaren Energie linear abhängig nachgeführt wird.

7. Transponder nach einem der Ansprüche 1 bis 6, **dadurch gekennzeichnet, daß** die Taktfrequenz gegenüber einer definierten Nenn-Taktfrequenz abgesenkt wird, um auch dann einen Betrieb der digitalen Schaltung (10) zu ermöglichen, wenn die Feldstärke des Magnetfelds am Transponder einen Nennwert unterschreitet.

8. Transponder nach einem der Ansprüche 1 bis 7, **dadurch gekennzeichnet, daß** bei Erreichen einer definierten Maximal-Taktfrequenz

   - eine Ladungspumpe zugeschaltet wird, um die Schreibgeschwindigkeit eines zu der digitalen Schaltung (10) gehörigen EPROMs (18) zu steigern; und/oder
   - ein Shuntregler (RS) in Betrieb gesetzt wird, um überschüssige Energie mit Hilfe eines ohmschen Widerstandselements in Wärme umzusetzen.

9. Transponder nach einem der Ansprüche 4 bis 8, **dadurch gekennzeichnet, daß** der erste Eingang des Frequenzteilers mit einem Oszillator, der ein Signal fester Frequenz liefert, verbunden ist.

10. Kontaktlose Chipkarte mit einem Transponder nach einem der Ansprüche 1 bis 9.

11. Identifizierungselement mit einem Transponder nach einem der Ansprüche 1 bis 9.

12. Identifizierungselement nach Anspruch 11 in Form eines Autoschlüssels als elektronischer Schlüssel zum Lösen einer elektronischen Wegfahrsperre.

13. Identifizierungselement nach Anspruch 11 mit einer Kapsel zum Inkorporieren in ein Lebewesen.

**Claims**

1. A transponder having an internal digital circuit (10) operated by a clock generator (14) with a clock signal having a clock frequency, and an internal energy supply (12) fed contactlessly by an external alternating magnetic field, **characterized in that** the clock generator has a clock frequency adjusting device (30-34; 40) with means for adjusting the clock frequency of the clock signal (CLK) in dependence on the field strength of the external magnetic field on the transponder (2), the clock frequency adjusting device consisting of a voltage-controlled oscillator or an oscillator (40) having connected downstream thereof a frequency divider (34) with an adjustable division ratio.

2. The transponder according to claim 1 having a receive antenna (L2) for the magnetic field and a rectifier (12) connected to the receive antenna, **characterized in that** the unregulated voltage ($U_{dd}$) present at the output of the rectifier, which is representative of the field strength of the magnetic field on the receive antenna, is supplied as an actuating signal to the clock frequency adjusting device (14).

3. The transponder according to claim 1 or 2, **characterized in that** the input of the voltage-controlled oscillator is supplied the unregulated voltage or a signal value derived therefrom, and whose output delivers the clock signal or a precursor signal of the clock signal (CLK).

4. The transponder according to claim 1 or 2, **characterized in that** the clock frequency adjusting device has:

    - an analog-to-digital converter (32) that converts the unregulated voltage into a digital value;
    - the frequency divider 34 with an adjustable division ratio,

      i) that is subjected at a first input to a fixed-frequency signal that is derived from a voltage induced on the coil (L2), and
      ii) whose second input receives through the analog-to-digital converter (32) a divisor signal derived from the unregulated voltage, and
      iii) whose output delivers the clock signal (CLK).

5. The transponder according to any of claims 1 to 4 having an interface circuit (20) that is used for data exchange with an external device and is operated with a communication clock signal of fixed frequency.

6. The transponder according to any of claims 1 to 5, **characterized in that** the clock frequency of the clock signal (CLK) is readjusted in linearly dependent fashion to the energy available on the transponder through the magnetic field within a defined working area.

7. The transponder according to any of claims 1 to 6, **characterized in that** the clock frequency is lowered with respect to a defined nominal clock frequency in order to permit operation of the digital circuit (10) when the field strength of the magnetic field on the transponder falls below a nominal value.

8. The transponder according to any of claims 1 to 7, **characterized in that** when a defined maximum clock frequency is reached

    - a charge pump is connected in order to increase the writing speed of an EPROM (18) belonging to the digital circuit (10); and/or
    - a shunt regulator (RS) is activated in order to convert excess energy into heat with the aid of a resistive element.

9. The transponder according to any of claims 4 to 8, **characterized in that** the first input of the frequency divider is connected with an oscillator that delivers a signal of fixed frequency.

10. A contactless chip card with a transponder according to any of claims 1 to 9.

11. An identification element with a transponder according to any of claims 1 to 9.

12. An identification element according to claim 11 in the form of an auto key as an electronic key for releasing an electronic immobilizer.

13. The identification element according to claim 11 with a capsule for incorporation in a living creature.

**Revendications**

1. Transpondeur, comprenant un circuit (10) numérique interne, qui est exploité par un générateur de rythme (14) dont le signal de rythme présente une fréquence de rythme, et une alimentation en énergie (12) interne, qui est alimentée par un champ magnétique alternatif extérieur, **caractérisé en ce que** le générateur de rythme présente un dispositif de réglage de fréquence de rythme (30-34 ; 40) avec des moyens pour le réglage de la fréquence de rythme du signal de rythme (CLK) en fonction de l'intensité du champ magnétique extérieur sur le transpondeur (2), le dispositif de réglage de fréquence de rythme comprenant un oscillateur commandé par tension ou un oscillateur (40) en aval duquel est branché un diviseur de fréquence (34) présentant un rapport de division réglable.

2. Transpondeur selon la revendication 1, comprenant une antenne de réception (L2) pour le champ magnétique et un redresseur (12) raccordé à l'antenne de réception, **caractérisé en ce que** la tension (U$_{dd}$) appliquée à la sortie du redresseur et non régulée, qui est représentative de l'intensité du champ magnétique sur l'antenne de réception, est amenée comme signal de commande au dispositif de réglage de fréquence de rythme (14).

3. Transpondeur selon la revendication 1 ou 2, **caractérisé en ce que** la tension non régulée ou une valeur de signal déduite de cette tension est amenée à l'entrée de l'oscillateur commandé par tension, et dont la sortie fournit le signal de rythme ou un signal précurseur du signal de rythme (CLK).

4. Transpondeur selon la revendication 1 ou 2, **caractérisé en ce que** le dispositif de réglage du signal de rythme présente :

   - un convertisseur analogique-numérique (32) qui convertit la tension non régulée en une valeur numérique ;
   - le diviseur de fréquence 34 avec un rapport de division réglable,

      i) qui est alimenté sur une première entrée avec un signal de fréquence fixe, lequel est déduit d'une tension induite sur la bobine L2,
      ii) dont la seconde entrée reçoit par le convertisseur analogique-numérique (32) un signal de diviseur déduit de la tension non régulée.
      iii) dont la sortie envoie le signal de rythme (CLK).

5. Transpondeur selon l'une quelconque des revendications 1 à 4, comprenant un circuit d'interface (20), qui sert à l'échange de données avec un appareil externe et qui est exploité avec un signal de rythme de communication de fréquence fixe.

6. Transpondeur selon l'une quelconque des revendications 1 à 5, **caractérisé en ce que** la fréquence du signal de rythme (CLK) est asservie de façon linéaire et dépendante à l'énergie disponible sur le transpondeur par le champ magnétique à l'intérieur d'une plage de travail définie.

7. Transpondeur selon l'une quelconque des revendications 1 à 6, **caractérisé en ce que** la fréquence de rythme est réduite par rapport à une fréquence de rythme nominale définie, afin de permettre un fonctionnement du circuit (10) numérique même dans les cas où l'intensité de champ du champ magnétique sur le transpondeur est inférieure à une valeur nominale.

8. Transpondeur selon l'une quelconque des revendications 1 à 7, **caractérisé en ce que**, lorsqu'on atteint une fréquence de rythme maximale définie,

   - une pompe de charge est connectée afin d'augmenter la vitesse d'écriture d'une EPROM (18) spécifique au circuit (10) numérique ; et/ou
   - un régulateur de shunt (RS) est mis en service, afin de convertir l'énergie excédentaire en chaleur à l'aide d'un élément de résistance ohmique.

9. Transpondeur selon l'une quelconque des revendications 4 à 8, **caractérisé en ce que** la première entrée du diviseur de fréquence est reliée à un oscillateur qui fournit un signal de fréquence fixe.

10. Carte à puce sans contact avec un transpondeur selon l'une quelconque des résistances 1 à 9.

11. Elément d'identification avec un transpondeur selon l'une quelconque des revendications 1 à 9.

12. Elément d'identification selon la revendication 11 sous la forme d'un code de voiture comme code électronique pour le déblocage d'un système anti-démarrage électronique.

13. Elément d'identification selon la revendication 11 avec une capsule à intégrer dans un être vivant.

**FIG.1**

**FIG.2**

**FIG.3**

RS
[Ohm]

$10^5$

$10^4$

$10^3$

$10^2$

0.05    0.1    0.15    0.2

k

FIG.4

Udd

30

$\triangle U$

32

ADU

14A

Osz.    $f_1$

36

L2

$\div$

34

CLK

Uref

FIG.5

Udd

30

$\triangle U$

40

VCO

CLK

14B    FIG.6

Uref.